(19) Europäisches Patentamt
European Patent Office
Office européen des brevets

(11) EP 1 382 638 A1

(12) EUROPEAN PATENT APPLICATION

(43) Date of publication:
**21.01.2004 Bulletin 2004/04**

(51) Int Cl.[7]: **C08L 23/12**, C08K 5/00, C08K 5/098

(21) Application number: **02016009.9**

(22) Date of filing: **18.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Borealis GmbH**
**2323 Schwechat-Mannswörth (AT)**

(72) Inventors:
- **Gahleitner, Markus Dipl.-Ing. Dr**
  **4501 Neuhofen/Krems (AT)**
- **Hesse, Achim Dr.**
  **01067 Dresden (DE)**
- **Hauer, Andreas**
  **4203 Altenberg (AT)**

(74) Representative: **VA TECH Patente GmbH & Co**
**Stahlstrasse 21a**
**4031 Linz (AT)**

# (54) Polypropylene composition with improved stiffness and toughness

(57) The invention refers to a polypropylene composition with improved stiffness and improved toughness, comprising a component **A** which is comprised of a propylene homopolymer or a propylene copolymer with up to 50 mol% of at least one of ethylene and $C_4$-$C_8$ α-olefins or mixtures of such propylene homo- and copolymers, a component **B** which is comprised of a propylene polymer having strain hardening behaviour, and a component **C** which comprises a β-nucleating agent.

EP 1 382 638 A1

## Description

The invention relates to a polypropylene composition with improved mechanical properties. More particularly the invention relates to polypropylene compositions with an improved ratio of stiffness and toughness. The present invention also relates to a process for producing these polypropylene compositions.

The polypropylene compositions of the invention are especially useful for applications where ordinarily controversial mechanical requirements, i.e. high stiffness and high impact strength must be simultaneously met, e.g. for housings for household and electric appliances.

## Background of the invention

The continuous improvement of polypropylene grades is an essential condition for the ongoing market growth and the penetration of new application areas. Expanding the mechanical property envelope in all directions is a key element in this development.

Various attempts have been made in the past to achieve a simultaneous increase of stiffness (modulus) and toughness (impact strength). Obata et al. for example describe the development of the "super olefin polymer" (SOP), which results from a special combination of fine particulate fillers and elastomer-modified polypropylene (*Polym.Eng. Sci.* 41 (2001) 408-416). This possibility is however limited to these rather complex and high cost components and therefore not applicable in all cases. Other limitations apply to the use of α-nucleation for simultaneous stiffness and toughness increase as described in EP 278 470 B1, which is limited to low MFR values and coupled to the typical shrinkage increase induced by nucleation.

It is well known that selective β-nucleation of polypropylene leads to an increase in toughness, which is especially pronounced at high molecular weights (for an analysis of this effect see Grein et al., *Polymer* 43 (2002) 3279-3293). This positive effect is, however, partially offset by a stiffness reduction, as outlined for example in EP 686 062 A1. Prior attempts to combine α- and β-nucleation for a positive interaction of both effects have been unsuccessful.

## Object of the Invention

It is therefore the object of the invention to provide a polypropylene composition with an improved ratio of stiffness and toughness. It is a further object of the invention to provide a process for producing a polypropylene composition which shows an improved ratio of stiffness and toughness.

An improved ratio of stiffness and toughness means, that - compared to a starting polypropylene composition - at least one of both properties is increased, while the second property remains at least at the starting level. It is of course preferred and also achieved with most embodiments of the present invention, that both properties are increased.

## Detailed description of the invention

Surprisingly it was possible to achieve the improved ratio of stiffness and toughness by combining β-nucleation of polypropylene with a polypropylene having strain hardening behaviour.

The present invention therefore relates to a polyproylene composition with an improved ratio of stiffness and toughness, comprising

a) a component **A** which is comprised of a propylene homopolymer or a propylene copolymer with up to 50 mol% of at least one of ethylene and $C_4$-$C_8$ α-olefins or mixtures of such propylene homo- and copolymers,

b) a component **B** which is comprised of a propylene polymer having strain hardening behaviour, and

c) a component **C** which comprises a β-nucleating agent.

Component A may comprise either a propylene homopolymer, a propylene copolymer or a blend of different propylene homo- and/or copolymers. Suitable propylene copolymers are comprised of up to 50 mol%, preferably 20 mol%, of comonomers other than propylene, which comonomers may comprise any one or more of ethylene and $C_4$-$C_8$ α-olefins. Particularly preferred propylene copolymers are propylene/ethylene, propylene/1-butene and propylene/ethylene/1-butene copolymers. The propylene copolymers preferably are random and/or block copolymers.

In the above composition the β-nucleating agent acts to increase the toughness of the composition, which is achieved by causing at least a part of the polypropylene to crystallise in the hexagonal or pseudohexagonal β-modification, while component **B** is responsible for an increased stiffness.

Although it was until now common knowledge that an increase in stiffness leads to a decrease in toughness and vice

versa, it has surprisingly been found that combining β-nucleation and a propylene polymer having strain hardening behaviour does not have this oppositely oriented effect.

The polypropylenes of component **A** have - regardless of their composition - varying degrees of stiffness and toughness, e.g. a Charpy notched impact strength according to ISO 179 1eA of from about 2 to about 50 $kJ/m^2$ at 23 °C and a flexural modulus according to ISO 178 of from about 1000 to about 2000 MPa. Regardless, however, of the initial values of the respective values of stiffness and toughness, it has been found, that by blending with a propylene polymer having strain hardening behaviour and with a β-nucleating agent an improved ratio of stiffness and toughness is achieved. In most cases both properties are remarkably improved, while in some cases just one of these properties is only moderately increased.

A preferred MFR-range for component **A** is from 0.05 - 100 g/10 min.

**Strain hardening behaviour** as used herein is defined according to Fig. 1 and 2.

Fig. 1 shows a schematic representation of the experimental procedure which is used to determine strain hardening. The strain hardening behaviour of polymers is analysed by Rheotens apparatus **1** (product of Göttfert, Siemensstr. 2, 74711 Buchen, Germany) in which a melt strand **2** is elongated by drawing down with a defined acceleration. The haul-off force F in dependence of draw-down velocity v is recorded.

The test procedure is performed in a standard climatised room with controlled room temperature of T = 23 °C. The Rheotens apparatus **1** is combined with an extruder/melt pump **3** for continuous feeding of the melt strand **2.** The extrusion temperature is 200 °C; a capillary die with a diameter of 2 mm and a length of 6 mm is used and the acceleration of the melt strand **2** drawn down is 120 $mm/s^2$.

The schematic diagram in Figure 1 shows in an exemplary fashion the measured increase in haul-off force F (i.e. "melt strength") vs. the increase in draw-down velocity v (i.e. "drawability").

Figure 2 shows the recorded curves of Rheotens measurements of polymer samples with and without strain hardening behaviour. The maximum points ($F_{max}$; $v_{max}$) at failure of the strand are characteristic for the strength and the drawability of the melt.

The standard propylene polymers **4,5,6** with MFR's of 0.3, 2.0 and 3.0g/10min at 230 °C/2.16 kg show a very low melt strength and low drawability. They have no strain hardening.

Modified propylene polymers 7 (MFR of sample in diagram is 2 to 3g/10min at 230 °C/2.16 kg) or LDPE **8** (MFR of sample in diagram is 0.7 g/10 min at 190 °C/2.16 kg) show a completely different melt strength vs. drawability behaviour. With increasing the draw down velocity v the haul-off force F increases to a much higher level, compared to the standard propylene polymers **4,5,6**. This curve shape is characteristic for strain hardening. While polymers **4** and **5** show haul-off $F_{max}$ larger than 5 cN, they do not have strain hardening behaviour, because they do not have draw-down velocities $v_{max}$ larger than 150 mm/s.

"Propylene polymers which have strain hardening behaviour" as used herein have enhanced melt strength with haul-off forces $F_{max}$ > 5 cN and enhanced drawability with draw-down velocities $v_{max}$ > 150 mm/s.

The polypropylene compositions according to the invention may contain up to 50 wt% of component **B**.

Up to 50 wt% of component **B** are commercially reasonable. Technically satisfying stiffness increases are however already observed at lower levels. It is therefore preferred that the polypropylene compositions according to the invention contain an amount of up to 10 wt% and, still more preferred, an amount of up to 5 wt% of component **B**.

The polypropylene compositions according to the invention may also contain up to 99.9 wt% of component **A**. This is about the maximum reasonable content of component **A** where the respective amounts of the remaining components are still sufficiently high to achieve the desired effects.

Accordingly, preferred polypropylene compositions of the invention comprise 90.0 - 99.9, more preferably 95.0 - 99.5 wt% of component **A** and 0.1 - 10.0, more preferably 0.5 - 5.0 wt% of component **B.**

Basically, the polypropylene compositions of the invention are preferred to have an MFR of from 0.05-100 g/10 min, which is the range of processability, where almost all applications are situated which require simultaneously good stiffness and toughness.

A still more preferred MFR-range is from 0.1 - 50 g/10 min. Most conventional pipe and wire and cable applications, as well as most packaging applications have an MFR within this range.

An even more preferred MFR range is from 0.15-10 g/10 min. The toughness-increasing, as well as softness-increasing, effect of β-nucleation is very pronounced in this MFR-range. Therefore, an effective amount of compound **B** for again increasing the stiffness of the polypropylene composition is most desireable.

It is a further preferred feature of the polypropylene composition of the present invention that the MFR-ratio of component **A** to component **B** is from 0.1 to 20 and preferably from 0.5 to 2.0. At higher MFR ratios the mixing becomes very difficult and inhomogeneous products may result.

Having the MFR-ratio of components **A** and **B** within the given ranges ensures a good dispersability of the two polypropylenes. Dispersability of components **A** and **B** is still better when the MFR-ratio is between 0.5 and 2.0.

According to a preferred embodiment of the present invention the component **A** consists of a propylene homopolymer and, optionally, component **B** is also based on a propylene homopolymer.

Problems with brittleness are worst with non-β-nucleated propylene homopolymers and the toughness-increasing effect of β-nucleation is most pronounced for propylene homopolymers.

It is further preferred, that the propylene polymer with strain hardening behaviour of component B has a branching index g' of ≤ 0.9, preferably from 0.6 to 0.9.

**Definition and determination of Branching index**

The above mentioned preferred range of the branching index g' of 0.6 to 0.9 corresponds to an amount of 0,3 to 0, long chain branches per 1000 C. Both parameters can be determined from a combination of high temperature size exclusion chromatography (SEC) with viscosimetry. The underlying SEC investigations are carried out at 135 °C in 1,2,4-trichlorobenzene with solutions of 0.25 g/dl concentration. The molecular weight distributions are calculated from the results of a refractometric detector using the universal calibration method fitted for polypropylene. Parallel to that, the intrinsic viscosity of the complete polymer is determined at 135 °C in 1,2,4-trichlorobenzene with solutions of 0.05 g/dl concentration.

Polymers having long chain branches have a lower gyration radius in solution than the respective linear species with identical molecular weight. The theoretical branching index $g_{th}$ is then

$$g_{th} = \frac{\langle s^2 \rangle_{bra}}{\langle s^2 \rangle_{lin}} \qquad \text{where} \qquad \langle S^2 \rangle = \frac{1}{2N^2} \sum_{i=1}^{N} \sum_{j=1}^{N} \bar{r}_{ij}^2$$

is the gyration radius resulting from a summation of the end-to-end distances of the polymer molecules. Due to a proportionality between the gyration radius and the intrinsic viscosity, the branching index g' can simply be calculated as

$$g' = \left([\eta]_{bra} / [\eta]_{lin}\right)_M = g_{th}^{\varepsilon}$$

where the $[\eta]_{lin}$ value for the linear polymer is calculated from the SEC measurement with a usual relation and the $[\eta]_{bra}$ for the branched polymer is measured directly in solution.

The exponent ε is between 0,5 and 1 generally. Like $g_{th}$, g' is always less than 1 for long chain branched polymers, a lower value reflects a higher degree of branching. Details of the calculation and the relation to the chain structure can for example be found in a paper by B.M. Zimm and W.M. Stockmayer (*J. Chemical Physics* 17 (1949) 1301-1310).

With several assumptions about the polymer structure, like an equal distribution of branches over the molecular weight distribution and a predominance of trifunctional links the average the density of long chain branches λ (in 1/1000C) can be estimated. For a comb-like structure the equation

$$g_{th} = \lambda + \frac{3(1-\lambda)^2}{p} + \frac{(1-\lambda)^3}{p^2} \text{with p=2}$$

taken from a paper by E.F. Casassa and G.C. Berry (*J.Polym.Sci A-2* 4 (1966) 881-892) can be used.

The propylene polymer having strain hardening behaviour of compound **B** can be produced by any number of processes, e.g. by treatment of the unmodified propylene polymer with thermally decomposing radical-forming agents and/or by treatment with ionizing radiation, where both treatments may optionally be accompanied or followed by a treatment with bi- or multifunctional ethylenically unsaturated monomers, e.g. butadiene, isoprene, dimethylbutadiene, divinylbenzene or trivinylbenzene. Further processes may be suitable for the production of the modified propylene polymer, provided that the resulting modified propylene polymer meets the characteristics as required regarding strain hardening behaviour.

"Bifunctional ethylenically unsaturated" as used above means the presence of two nonaromatic double bonds, as in e.g. divinylbenzene or cyclopentadiene. Only such bifunctional ethylenically unsaturated compounds are used which can be polymerised with the aid of free radicals. The bifunctionally unsaturated monomer is in its chemically bound state not actually "unsaturated", because the two double bonds are each used for a covalent bond to the polymer chains of the linear polypropylene.

Examples of the propylene polymers with strain hardening behaviour of component **B**, are in particular:

- polypropylenes modified by reaction with bismaleimido compounds in the melt (EP-A-0 574 801 and EP-A-0 574 804)
- polypropylenes modified by treatment with ionizing radiation (EP 0 190 889 A2)
- polypropylenes modified by treatment with peroxides in the solid phase (EP 0 384 431 A2) or in the melt (EP 0 142 724 A2),
- polypropylenes modified by treatment with bifunctional ethylenically unsaturated monomers under the action of ionizing radiation (EP-A-0 678 527),
- polypropylenes modified by treatment with bifunctional ethylenically unsaturated monomers in the presence of peroxides in the melt (EP-A-0 688 817 and EP-A-0 450 342).

From the above list, these polypropylenes are preferred, which are obtained by treatment with peroxides, especially when followed by a treatment with bifunctional ethylenically unsaturated monomers.
A preferred propylene polymer of component **B** is obtained by mixing a linear polypropylene with 0.01 to 3 wt% of an organic peroxide which is thermally decomposable under melting conditions of the polypropylene and heating and melting the mixture.
A still more preferred propylene polymer of component **B** is obtained by mixing a linear polypropylene with 0.01 to 3 wt% of an organic peroxide which is thermally decomposable under melting conditions of the polypropylene and with from 0.2 to 3 wt% of a bifunctional ethylenically unsaturated monomer and heating and melting the mixture.
The bifunctional ethylenically unsaturated monomer may be added at any time before or during heating and melting the linear polypropylene/peroxide mixture. The bifunctional monomer may also be added to the linear polypropylene before it is mixed with the peroxide.
According to a preferred embodiment the bifunctional monomer is in gaseous or liquid state absorbed by the - still solid - polypropylene.
According to a preferred method the propylene polymers having strain hardening behaviour are prepared by mixing a particulate linear propylene polymer with from 0.05 to 3 wt%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30-100 °C, preferably of from 60-90 °C.
Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g. diluted with an inert gas or solvatised in an organic solvent. The bifunctional monomer is allowed to be absorbed by the particulate polypropylene at a temperature of from 20 to 120 °C, preferably of from 60 to 100 °C. Practical sorption times are from 10 to 1000 s, 60 to 600 s being preferred. This typically results in an absorbed amount of bifunctional monomer of from 0.01 to 10 wt%, respectively from 0.05 to 2 wt%, based on the linear propylene polymer.
The polypropylene/peroxide/monomer mixture is then heated and melted in an atmosphere comprising inert gas, e.g. $N_2$, and/or the bifunctional monomer, from sorption temperature to 210 °C. This causes the peroxides to decompose and to generate free radicals at the propylene polymer chains which react with the bifunctional monomers.
The melt is heated up to 280 °C in order to remove unreacted monomers and decomposition products and finally the melt is pelletised.
The linear polypropylene comprises propylene homopolymers, copolymers of propylene and ethylene and/or α-olefins with 4 to 18 carbon atoms and mixtures of such homo- and copolymers,
**[0036]** The particulate linear propylene polymer may have the shape of powders, granules or grit.
The above described process preferably is a continuous method, performed in continuous reactors, mixers, kneaders and extruders. Batchwise production of the modified propylene polymer, however is feasible as well.
Preferably the bifunctional monomers are absorbed by the linear propylene polymer from the gas phase.
The bifunctional ethylenically unsaturated monomers preferably are $C_4$ to $C_{10}$ dienes and/or $C_7$ to $C_{10}$ divinyl compounds. Especially preferred are butadiene, isoprene, dimethyl-butadiene or divinylbenzene.
The following peroxides are suitable for the above described process:

- acyl peroxides, such as dibenzoyl peroxide, benzoyl peroxide, 4-chlorobenzoyl peroxide, 3-methoxybenzoyl peroxide and methylbenzoyl peroxide;

- alkyl peroxides such as allyl tert-butyl peroxide, 2,2-di(tert-butylperoxy)butane, di-tert-amyl peroxide, 1,1 -bis(tert-butylperoxy)-3,3,5-trimethylcyclohexane, n-butyl 4,4-bis(tert-butylperoxy)valerate, diisopropylaminomethyl tert-amyl peroxide, dimethylaminomethyl tert-amyl peroxide, diethylaminomethyl tert-butyl peroxide, dimethylamino methyl tert-butyl peroxide, 1,1-di(tert-amylperoxy) cyclohexane, tert-amyl peroxide, tert-butyl cumyl peroxide, methyl isobutyl ketone peroxide, 2,2-Di(4,4-di(tert-butylperoxy)cyclohexyl)propane, tert-butyl peroxide and 1-hydroxybutyl n-butyl peroxide;

- peresters and peroxycarbonates, such as tert-butyl peroxyacetate, tert-butyl peroxydiethylacetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptane percarboxylate, tert-butyl 4-carbomethoxy perbutyrate, tert-amyl peroxy 2-ethylhexyl carbonate, tert-amyl peroxy-2-ethylhexanoate, tert-butyl cyclobutane percarboxylate, 1,4-Di(tert-butylperoxycarbo)cyclohexane, 1,1-Di(tert-butylperoxy)-3,3,5-trimethyl-cyclohexane, 1,1 -Di(tert-butylperoxy)cyclohexane, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl) perbenzoate, tert-butyl peroxy-2-ethylhexanoate, tert-butyl peroxy-3,5,5-trimethylhexanoate, tert-butyl 4-methoxyperbenzoate, tert-butyl peroxybenzoate, tert-butyl pernaphthoate, tert-butylperoxy isopropyl carbonate, tert-butylperoxy 2-ethylhexyl carbonate, tert-butyl pertoluate, tert-butyl 1-phenylcyclopropyl percarboxylate, tert-butyl 2-propylperpenten-2-oate, tert-butyl 1-methylcyclopropylpercarboxylate, tert-butyl 4-nitrophenylperacetate, tert-butyl nitrophenyl peroxycarbamate, tert-butyl N-succinimido percarboxylate, tert-butyl percrotonate, tert-butylpermaleic acid, tert-butyl permethacrylate, tert-butyl peroctoate, tert-butyl peroxyisobutyrate, tert-butyl peracrylate, tert-butyl perpropionate;

and mixtures of these peroxides.

Particularly preferred are dibenzoyl peroxide, tert-butyl peroxy-2-ethylhexanoate, tert-amyl peroxy-2-ethylhexanoate, tert-butyl peroxydiethylacetate, 1,4-Di(tert-butylperoxycarbo)cyclohexane, tert-butyl peroxyisobutyrate, 1,1-Di(tert-butylperoxy)-3,3,5-trimethyl-cyclohexane, Methyl isobutyl ketone peroxide, 2,2-Di(4,4-di(tert-butylperoxy) cyclohexyl)propane, 1,1 -Di(tert-butylperoxy)cyclohexane, tert-butyl peroxy-3,5,5-trimethylhexanoate, tert-amyl peroxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide and mixtures thereof.

These peroxides are preferred, because their mode of action was observed to be a compromise between polymer-chain-length-reducing degradation, which is undesireable in this instance, and the desired long chain branching.

## Definition of β-nucleating agent

As β-nucleating agent any nucleating agent can be used which is suitable for inducing crystallisation of propylene homo- and copolymers in the hexagonal or pseudohexagonal modification. Mixtures of such nucleating agents may also be employed.

Suitable types of β-nucleating agents are

- dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, e.g.

- N,N'-di-$C_5$-$C_8$-cycloalkyl-2,6-naphthalene dicarboxamide compounds such as
  N,N'-dicyclohexyl-2,6-naphthalene dicarboxamide and
  N,N'-dicyclooctyl-2,6-naphthalene dicarboxamide,

- N,N'-di-$C_5$-$C_8$-cycloalkyl-4,4-biphenyldicarboxamide compounds such as
  N,N'-dicyclohexyl-4,4-biphenyldicarboxamide and
  N,N'-dicyclopentyl-4,4-biphenyldicarboxamide,

- N,N'-di-$C_5$-$C_8$-cycloalkyl-terephthalamide compounds such as
  N,N'-dicyclohexylterephthalamide and N,N'-dicyclopentylterephthalamide,

- N,N'-di-$C_5$-$C_8$-cycloalkyl-1,4-cyclohexanedicarboxamide compounds such as
  N,N'-dicyclo-hexyl-1,4-cyclohexanedicarboxamide and
  N,N'-dicyclohexyl-1,4-cyclopentanedicarboxamide,

- diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g.

- N,N'-$C_6$-$C_{12}$-arylene-bis-benzamide compounds such as N,N'-p-phenylene-bis-benzamide and N,N'-1,5-naphthalene-bis-benzamide,

- N,N'-$C_5$-$C_8$-cycloalkyl-bis-benzamide compounds such as N,N'-1,4-cyclopentane-bis-benzamide and N,N'-1,4-cyclohexane-bis-benzamide,

- N,N'-p-$C_6$-$C_{12}$-arylene-bis-$C_5$-$C_8$-cycloalkylcarboxamide compounds such as N,N'-1,5-naphthalene-bis-cyclohexanecarboxamide and N,N'-1,4-phenylene-bis-cyclohexanecarboxamide, and

- N,N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,

- amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines, e.g.

- N-phenyl-5-(N-benzoylamino)pentane amide and N-cyclohexyl-4-(N-cyclohexyl-carbonylamino)benzamide.

Further suitable β-nucleating agents are

- quinacridone type compounds, e.g. quinacridone, dimethylquinacridone and dimethoxyquinacridone,

- quinacridonequinone type compounds, e.g. quinacridonequinone, a mixed crystal of 5,12-dihydro(2,3b)acridine-7,14-dione with quino(2,3b)acridine-6,7,13,14-(5H,12H)-tetrone and dimethoxyquinacridonequinone and

- dihydroquinacridone type compounds, e.g. dihydroquinacridone, dimethoxydihydroquinacridone and dibenzodihydroquinacridone.

Still further suitable β-nucleating agents are

- dicarboxylic acid salts of metals from group IIa of periodic table, e.g. pimelic acid calcium salt and suberic acid calcium salt; and

- mixtures of dicarboxylic acids and salts of metals from group IIa of the periodic table.

Still further suitable β-nucleating agents are

- salts of metals from group IIa of periodic system and imido acids of the formula

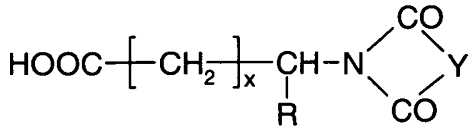

wherein x = 0 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cycloalkyl or $C_6$-$C_{12}$-aryl - substituted bivalent $C_6$-$C_{12}$-aromatic residues, e.g. calcium salts of phthaloylglycine, hexahydrophthaloylglycine, N-phthaloylalanine, phthalimidoacetate and/or N-4-methylphthaloylglycine.

Preferred β-nucleating agents are any one or mixtures of N,N'-dicyclohexyl-2,6-naphtalene dicarboxamide, the β-nucleating agents of EP 177961 and those of EP 682066.

Particularly preferred β-nucleating agents are any one or mixtures of a mixed crystal of 5,12-dihydro-quino (2,3-b)acridine-7,14-dione with quino(2,3-b)acridine-6,7,13,14(5H, 12H)-tetrone, N,N'-dicyclohexyl-2,6-naphtalene dicarboxamide and salts of dicarboxylic acids with at least 7 carbon atoms with metals of group IIa of the periodic table.

These β-nucleating agents are characterised by very high activity. Calcium pimelate is still more preferred as β-nucleating agent because it combines a very high activity with being completely colorless and it is very inexpensive.

There is also a process provided for producing a polypropylene composition according to the invention. Such a process is comprised by the steps of mixing

a) a component **A** which is comprised of a propylene homopolymer or a propylene copolymer with up to 50 mol% of at least one of ethylene and $C_4$-$C_8$ α-olefins or mixtures of such propylene homo- and copolymers, with

b) a component **B** which is comprised of a propylene polymer having strain hardening behaviour, and with

c) an effective amount of a component **C** which comprises a β-nucleating agent,
melting and homogenising the mixture and
cooling and crystallising the mixture.

Whether a certain amount of a β-nucleating agent is effective, is known to the skilled person. Examples of effective amounts of β-nucleating agents are given in the literature and also in EP 177961 and EP 682066 and are for example from 5 x $10^{-8}$ for certain high active β-nucleating agents (e.g. that of EP 177961) up to 2.0 wt%. A preferred amount of β-nucleating agent is from 0.0001 to 2.0 wt% based on the total weight of components **A+B.**

The polypropylene composition of the present invention is preferably produced by melt mixing 0.0001 to 2.0 wt% based on the total weight of components **A+B,** of β-nucleating agent(s) with either component **A** or with an already prepared blend of components **A** and **B,** optionally adding conventional additives and/or stabilisers and/or fillers, at temperatures from 175 to 250 °C and cooling and crystallising the melt according to procedures which are state of the art. In case the β-nucleated component **A** is produced first, component **B** is then added by preferably first dry blending solid particulate components **(A+C)** and **B** and then melt mixing them as described above. It is also possible to dry blend components **A, B** and **C** and then melt mixing them as described above. Component **C** may comprise the pure substance, i.e. may contain only the β-nucleating agent, it may however also be employed in form of a masterbatch. It is also possible for component **B** to be the masterbatch, that contains the β-nucleating agent.

The present invention also refers to articles produced from these polypropylene compositions in conversion processes like injection molding, blow molding, pipe-extrusion, foaming and film extrusion including post conversion orientation in solid or semi-solid state.

The present invention also refers to the use of a propylene polymer having strain hardening behaviour and a β-nucleating agent for improving the ratio of stiffness and toughness in a polypropylene composition comprising a component **A** which is comprised of a propylene homopolymer or a propylene copolymer with up to 50 mol% of at least one of ethylene and $C_4$-$C_8$ α-olefins or mixtures of such propylene homo- and copolymers.

As already outlined above it has not known until now that combining β-nucleation and a propylene polymer having strain hardening behaviour has the effect of improving the ratio of stiffness and toughness in polypropylene compositions.

## Description of measurement methods

### MFR

The melt flow rates were measured under a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Flexural test

The flexural test was carried out according to the method of ISO 178 by using injection moulded test specimens as described in EN ISO 1873-2 (80 x 10 x 4 mm).

Charpy notched impact strength

The Charpy notched impact strength was determined according to ISO 179 / 1eA at 23 °C and at -20 °C by using injection moulded test specimens as described in EN ISO 1873-2 (80 x 10 x 4mm).

**Determination of β-crystallinity**

The β-crystallinity was determined by Differential Scanning Calorimetry (DSC). DSC was run according to ISO 3146 / part 3 / method C2 with a scan rate of 10 °C/min. The amount of ß-modification was calculated from the second heat by the following formula:

$$\beta\text{-area} / (\alpha\text{-area} + \beta\text{-area})$$

Since the thermodynamical instable β-modification starts to be changed into the more stable α-modification at temperatures above 150 °C, a part of the β-modification is transferred within the heating process of DSC-measurement. Therefore the amount of β-PP determined by DSC is lower as when measured according to the method of Turner-Jones by WAXS (A. Turner-Jones et. al., Makromol. Chem 75 (1964) 134).

"Second heat" means, that the sample is heated according to ISO 3146 / part 3 / method C2 for a first time and then cooled to room temperature at a rate of 20 °C/min. The sample is then heated a second time, also according to ISO 3146 / part 3 / method C2. This second heat is relevant for measurement and calculation.

During the "first heat" all thermal history of the sample giving rise to different crystalline structure, which typically comes from different processing conditions and/or methods, is destroyed. Using the second heat for determination of β-crystallinity, it is possible to compare samples regardless of the way the samples were originally manufactured.

**Examples**

The polymers of component **A**, polymer 1 and polymer 2, are propylene homopolymers and were produced in a loop reactor in liquid propylene. As catalyst a Ziegler-Natta catalyst was used.

The polymer of component **B** was prepared by dry-blending a particulate propylene homopolymer (MFR = 0.25 g/10 min, average particle size 0.5 mm) with 0.65 wt% tert-butylperoxy isopropyl carbonate under nitrogen atmosphere and absorptively loading the polypropylene/peroxide mixture with 0.25 wt% of butadiene for 10 min at 60 °C. The mixture is transferred to a twin screw extruder, where it is melted at 230 °C, degassed and compounded with 0.1 wt% Irganox 1010, 0.1 wt% Irgafos 168, 0.1 wt% calcium stearate and 0.05 wt% hydrotalcit.

The obtained propylene polymer (MFR = 2.3 g/10 min) has a content of chemically bound butadiene of 0.21 wt%, determined by IR-measurement, and shows strain hardening behaviour, which is characterised by the Rheotens values of $F_{max}$=33cN and $v_{max}$ = 210 mm/s measured at failure of the strand. The branching index g' was 0.8.

Calciumpimelate was used as β-nucleating agent of component **C**, which was prepared by reacting 1 mol of pimelic acid with 1 mol calciumcarbonate in a mixture of ethanol and water at 60 - 80 °C. The produced calciumpimelate was filtered and dried.

The respective amounts (see table 1) of components **A**, **B** and **C** were mixed with conventional additives (0.1 % Irgafos 168, 0.1 % Irganox 1010, 0.1 % Ca-stearate, 0.3 % Glycerol monostearate) in an intensive mixer (Henschel mixer) for 20 seconds. The compositions were then compounded in a twin screw extruder at a temperature of 250 °C. The strands were quenched in cold water and pelletized. Injection molded test bars were produced and the Charpy notched impact strength according to ISO 179 and the flexural modulus according to ISO 178 were measured.

Table 1

| Examples | Composition | | | | DSC | | | | | |
|---|---|---|---|---|---|---|---|---|---|---|
| | A pol. | B wt% | C wt% | NA-11 wt% | Tm(β) °C | Hm(β) J/g | Tm(α) °C | Hm(α) J/g | Tc °C | F(β) % |
| polymer 1 | 1 | 0 | 0 | 0 | - | 0.0 | 163.6 | 96.0 | 120.5 | 0.0 |
| polymer 2 | 2 | 0 | 0 | 0 | - | 0.0 | 165.5 | 102.5 | 118.3 | 0.0 |
| 1 | 1 | 1 | 0.1 | 0 | 151.5 | 66.6 | 165.0 | 38.0 | 123.4 | 63.7 |
| 2 | 1 | 2 | 0.1 | 0 | 151.6 | 72.1 | 164.5 | 29.2 | 123.5 | 71.2 |
| 3 | 2 | 2 | 0.1 | 0 | 152.1 | 74.3 | 165.2 | 28.5 | 124.3 | 72.3 |
| C2 | 1 | 2 | 0 | 0 | - | 0.0 | 164.6 | 103.2 | 123.3 | 0.0 |
| C3 | 1 | 0 | 0.2 | 0 | 152.4 | 79.8 | 165.7 | 24.2 | 123.2 | 76.7 |
| C5 | 2 | 0 | 0.1 | 0 | 152.8 | 82.6 | 165.1 | 22.1 | 123.5 | 78.9 |
| C6 | 2 | 0 | 0.1 | 0.1 | 153.2 | 1.2 | 166.5 | 103.5 | 126.9 | 1.1 |

Table 1 (continued)

| Examples | Composition | | | | Flexural test | | NIS | |
|---|---|---|---|---|---|---|---|---|
| | A pol. | B wt% | C wt% | NA-11 wt% | Modulus MPa | Str.3.5% MPa | + 23°C kJ/m² | - 20°C kJ/m² |
| polymer 1 | 1 | 0 | 0 | 0 | 1547 | 38.7 | 16.7 | 2.2 |
| polymer 2 | 2 | 0 | 0 | 0 | 1365 | 35.3 | 4.3 | 1.2 |
| 1 | 1 | 1 | 0.1 | 0 | 1556 | 39.2 | 36.4 | 2.8 |
| 2 | 1 | 2 | 0.1 | 0 | 1614 | 40.9 | 25.8 | 2.3 |
| 3 | 2 | 2 | 0.1 | 0 | 1682 | 43.2 | 5.2 | 1.5 |
| C2 | 1 | 2 | 0 | 0 | 1655 | 42.1 | 12.1 | 2.0 |
| C3 | 1 | 0 | 0.2 | 0 | 1302 | 31.7 | 53.8 | 5.1 |
| C5 | 2 | 0 | 0.1 | 0 | 1305 | 31.9 | 11.1 | 1.8 |
| C6 | 2 | 0 | 0.1 | 0.1 | 1765 | 45.0 | 2.9 | 0.9 |

| | |
|---|---|
| A | component **A** (polymer 1 or polymer 2) |
| B | component **B** (polypropylene homopolymer with strain hardening behaviour, MFR = 2.5 g/10 min) |
| C | component **C** (Calcium pimelate) |
| polymer 1 | propylene homopolymer, MFR = 0.3 g/10 min |
| polymer 2 | propylene homopolymer, MFR = 2.0 g/10 min |
| NA-11 | Sodium 2,2'- methylene bis-(4,6-di-tert. butylphenyl) phosphate (conventional α-nucleating agent) |
| $T_m$(ß) | melt temperature of ß-phase |
| $H_m$(ß) | melting enthalpy of ß-phase |
| $T_m$(α) | melt temperature of α-phase |
| $H_m$(α) | melting enthalpy of α-phase |
| $T_c$ | crystallisation temperature |
| F(ß) | relative peak area of ß-modification |
| NIS | notched impact strength determined according to ISO 179 1eA |

## Claims

1. Polypropylene composition with an improved ratio of stiffness and toughness, comprising

   a) a component **A** which is comprised of a propylene homopolymer or a propylene copolymer with up to 50 mol% of at least one of ethylene and $C_4$-$C_8$ $\alpha$-olefins or mixtures of such propylene homo- and copolymers,

   b) a component **B** which is comprised of a propylene polymer having strain hardening behaviour, and

   c) a component **C** which comprises a $\beta$-nucleating agent.

2. Polypropylene composition according to claim 1, **characterised in that** it comprises up to 50 wt% of component **B**.

3. Polypropylene composition according to claim 1 or 2, **characterised in that** it comprises up to 99.9 wt% of component **A.**

4. Polypropylene composition according to any one of claims 1-3, **characterised in that** it comprises 90.0 - 99.9, preferably 95.0 - 99.5 wt% of component **A** and 0.1 - 10.0, preferably 0.5 -5.0 wt% of component **B**.

5. Polypropylene composition according to any one of claims 1-4, **characterised in that** it has an MFR of 0.05 - 100 g/10 min, preferably 0.1 - 50 g/10 mm, more preferably 0.15-10 g/10 min.

6. Polypropylene composition according to any one of claims 1-5, **characterised in that** the MFR-ratio of component **A** to component **B** is from 0.05 to 20, preferably from 0.5 to 2.0.

7. Polypropylene composition according to any one of claims 1-6, **characterised in that** component **A** consists of a propylene homopolymer and, optionally, component B is based on a propylene homopolymer.

8. Polypropylene composition according to one of claims 1 to 7, **characterised in that** the propylene polymer with strain hardening behaviour of component **B** has a branching index g' of $\leq$ 0.9, preferably from 0.6 to 0.9.

9. Polypropylene composition according to one of claims 1-8, **characterised in that** the propylene polymer of component **B** is obtained by mixing a linear polypropylene with 0.01 to 3 wt% of an organic peroxide which is thermally decomposable under melting conditions of the polypropylene and, optionally, with from 0.2 to 3 wt% of a bifunctionally unsaturated monomer and subsequent heating and melting.

10. Polypropylene composition according to one of claims 1 to 7, **characterised in that** the $\beta$-nucleating agent of component **C** comprises any one or mixtures of a mixed crystal of 5,12-dihydro-quino(2,3-b)acridine-7,14-dione with quino(2,3-b)acridine-6,7,13,14(5H, 12H)-tetrone, N,N'-dicyclohexyl-2,6-naphtalene dicarboxamide and salts of dicarboxylic acids with at least 7 carbon atoms with metals of group IIa of the periodic table, preferably calcium pimelate.

11. Process for producing a polypropylene composition according to claim 1, which is **characterised by** mixing

    a) a component **A** which is comprised of a propylene homopolymer or a propylene copolymer with up to 50 mol% of at least one of ethylene and $C_4$-$C_8$ $\alpha$-olefins or mixtures of such propylene homo- and copolymers, with

    b) a component **B** which is comprised of a propylene polymer having strain hardening behaviour, and with

    c) an effective amount of a component **C** which comprises a $\beta$-nucleating agent melting and homogenising the mixture and cooling and crystallising the mixture.

12. Article, containing a polypropylene composition according to one of claims 1 to 10, produced in conversion processes selected from the group consisting of injection molding, blow molding, pipe-extrusion, foaming and film extrusion including post conversion orientation in solid or semi-solid state.

13. Use of a propylene polymer having strain hardening behaviour and a $\beta$-nucleating agent for improving the ratio of stiffness and toughness in a polypropylene composition comprising a component **A** which is comprised of a propylene homopolymer or a propylene copolymer with up to 50 mol% of at least one of ethylene and $C_4$-$C_8$ $\alpha$-olefins or mixtures of such propylene homo- and copolymers.

Fig. 1:

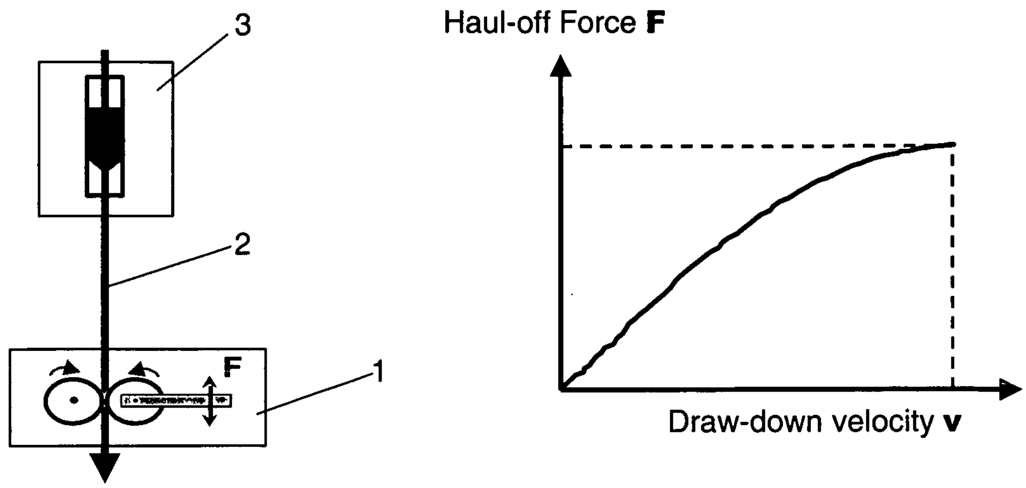
3
2
1
F
Haul-off Force F
Draw-down velocity v

Fig. 2:

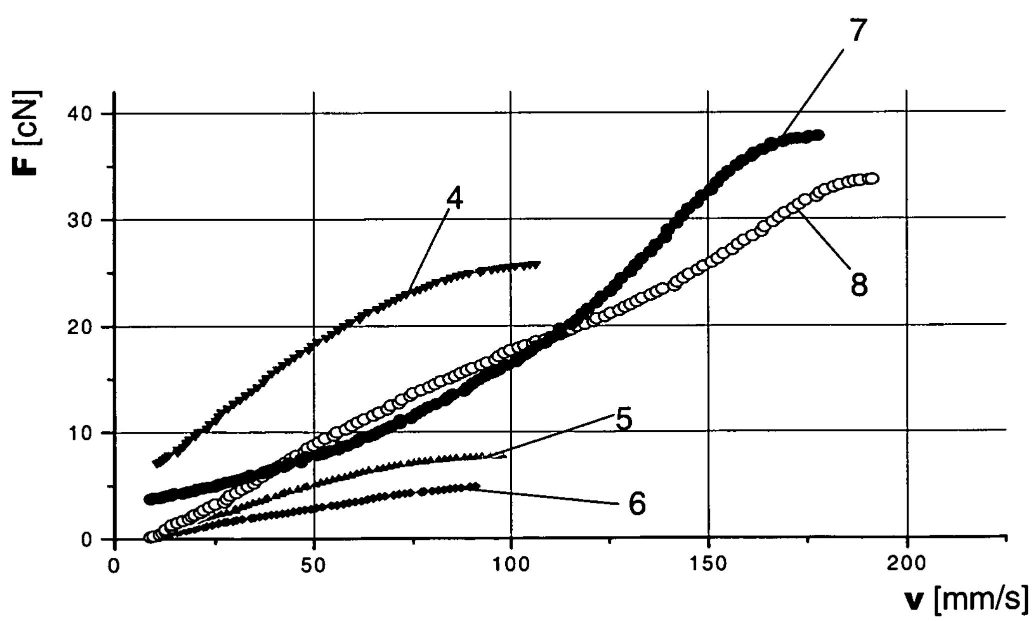
7
4
8
5
6
F [cN]
40
30
20
10
0
0
50
100
150
200
v [mm/s]

European Patent Office

# EUROPEAN SEARCH REPORT

Application Number
EP 02 01 6009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 077 907 A (GAHLEITNER MARKUS ET AL) 20 June 2000 (2000-06-20)<br>* abstract; claims 1-35 *<br>* column 2, line 45-50,60-65 *<br>* column 3, line 1-5 *<br>* column 4, line 30-67 *<br>* column 5, line 1-55 *<br>* column 6, line 6-15 *<br>* column 9, line 55-62 *<br>* column 22, line 35-38,65-67 *<br>--- | 1-13 | C08L23/12<br>C08K5/00<br>C08K5/098 |
| Y | EP 0 625 545 A (HIMONT INC) 23 November 1994 (1994-11-23)<br>* abstract; claims 1-10 *<br>* page 2, line 1-22 *<br>* page 4, line 14-20 *<br>--- | 1-13 | |
| D,Y | EP 0 682 066 A (DANUBIA PETROCHEM POLYMERE) 15 November 1995 (1995-11-15)<br>* abstract; claims 1-10 *<br>* page 3, line 5-8 *<br>--- | 1-13 | **TECHNICAL FIELDS SEARCHED (Int.Cl.7)** |
| A | US 3 408 341 A (CASH JR GEORGE O ET AL) 29 October 1968 (1968-10-29)<br>* abstract; claims 1-17 *<br>* column 3, line 30,40 *<br>* column 4, line 49-53 *<br>* column 6, line 10-35 *<br>--- | 1-13 | C08L<br>C08K |
| A | EP 0 877 039 A (TARGOR GMBH) 11 November 1998 (1998-11-11)<br>* abstract; claims 1-9 *<br>--- | 1-13 | |
| A | EP 0 962 489 A (NEW JAPAN CHEM CO LTD) 8 December 1999 (1999-12-08)<br>* abstract; claims 1-9 *<br>---<br>-/-- | 1-13 | |

The present search report has been drawn up for all claims

| Place of search | Date of completion of the search | Examiner |
|---|---|---|
| THE HAGUE | 13 January 2003 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 6009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 174 261 A (BORCALIS GMBH) 23 January 2002 (2002-01-23) * abstract; claims 1-17 * ----- | 1-13 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 January 2003 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 6009

This annex lists the patent family membersrelating to the patent documents cited in the above-mentioned European search report.
The members are as contained in the European Patent Office EDP file on
The European Patent Office is in no way liable for these particulars which are merely given for the purpose of information.

13-01-2003

| Patent document cited in search report | Publication date | Patent family member(s) | Publication date |
|---|---|---|---|
| US 6077907 A | 20-06-2000 | DE 19729231 A1 | 14-01-1999 |
| | | DE 19806105 A1 | 19-08-1999 |
| | | CZ 9802157 A3 | 15-12-1999 |
| | | EP 0890612 A2 | 13-01-1999 |
| EP 0625545 A | 23-11-1994 | US 5368919 A | 29-11-1994 |
| | | AT 165387 T | 15-05-1998 |
| | | BR 9402020 A | 27-12-1994 |
| | | CA 2123967 A1 | 21-11-1994 |
| | | CN 1098726 A ,B | 15-02-1995 |
| | | CZ 9401231 A3 | 18-01-1995 |
| | | DE 69409705 D1 | 28-05-1998 |
| | | DE 69409705 T2 | 24-09-1998 |
| | | EP 0625545 A1 | 23-11-1994 |
| | | ES 2117735 T3 | 16-08-1998 |
| | | JP 7053797 A | 28-02-1995 |
| EP 0682066 A | 15-11-1995 | AT 404252 B | 27-10-1998 |
| | | AT 99494 A | 15-02-1998 |
| | | AT 181942 T | 15-07-1999 |
| | | CZ 9501233 A3 | 15-11-1995 |
| | | DE 59506332 D1 | 12-08-1999 |
| | | DK 682066 T3 | 22-11-1999 |
| | | EP 0682066 A1 | 15-11-1995 |
| | | ES 2133610 T3 | 16-09-1999 |
| | | HR 950263 A1 | 31-10-1997 |
| | | HU 74309 A2 | 30-12-1996 |
| | | JP 8048828 A | 20-02-1996 |
| | | SK 62295 A3 | 06-12-1995 |
| | | US 5681922 A | 28-10-1997 |
| US 3408341 A | 29-10-1968 | DE 1544851 A1 | 27-05-1970 |
| | | FR 1450982 A | 24-06-1966 |
| | | GB 1126203 A | 05-09-1968 |
| EP 0877039 A | 11-11-1998 | DE 19718900 A1 | 12-11-1998 |
| | | AT 206442 T | 15-10-2001 |
| | | DE 59801610 D1 | 08-11-2001 |
| | | EP 0877039 A1 | 11-11-1998 |
| | | ES 2167036 T3 | 01-05-2002 |
| EP 0962489 A | 08-12-1999 | JP 3243835 B2 | 07-01-2002 |
| | | JP 5310665 A | 22-11-1993 |
| | | JP 6107875 A | 19-04-1994 |
| | | EP 0962489 A2 | 08-12-1999 |
| | | DE 69329508 D1 | 09-11-2000 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 01 6009

This annex lists the patent family membersrelating to the patent documents cited in the above-mentioned European search report.
The members are as contained in the European Patent Office EDP file on
The European Patent Office is in no way liable for these particulars which are merely given for the purpose of information.

13-01-2003

| Patent document cited in search report | | Publication date | Patent family member(s) | | Publication date |
|---|---|---|---|---|---|
| EP 0962489 | A | | DE | 69329508 T2 | 03-05-2001 |
| | | | EP | 0557721 A2 | 01-09-1993 |
| | | | JP | 5262936 A | 12-10-1993 |
| | | | KR | 242873 B1 | 01-02-2000 |
| | | | KR | 266916 B1 | 15-09-2000 |
| | | | US | 6235823 B1 | 22-05-2001 |
| EP 1174261 | A | 23-01-2002 | EP | 1174261 A1 | 23-01-2002 |
| | | | AU | 8581901 A | 05-02-2002 |
| | | | WO | 0207969 A1 | 31-01-2002 |

EPO FORM P0459

For more details about this annex : see Official Journal of the European Patent Office, No. 12/82